# EUROPÄISCHE PATENTSCHRIFT

(11) **EP 0 889 776 B1**
(45) Veröffentlichungstag und Bekanntmachung des Hinweises auf die Patenterteilung: **12.07.2000**
(21) Anmeldenummer: 97908228.6
(22) Anmeldetag: 13.03.1997
(51) Int. Cl.: B29C 43/46, B21B 29/00, F16C 13/00, D21G 1/02, B21B 27/05

(54) **VERFAHREN ZUR BEEINFLUSSUNG DES WALZENSPALTES EINES GLÄTTWERKES UND DREHBAR GELAGERTE WALZE**
METHOD OF CONTROLLING THE NIP OF THE ROLLS OF A CALENDER, AND ROTATABLY MOUNTED ROLL FOR USE IN THE METHOD
PROCEDE PERMETTANT D'INFLUER SUR L'ECARTEMENT DES CYLINDRES D'UNE CALANDRE, ET CYLINDRE MONTE ROTATIF

(30) Priorität: 16.03.1996 DE 19610445
(43) Veröffentlichungstag der Anmeldung: 13.01.1999
(73) Patentinhaber: Brückner Maschinenbau GmbH, 83313 Siegsdorf (DE)
(72) Erfinder: BONGAERTS, Horst, D-42853 Remscheid (DE); JENKE, Dietmar, D-42477 Radevormwald (DE)
(74) Vertreter: Flach, Dieter Dipl.-Phys.
(86) Internationale Anmeldenummer: EP9701270
(87) Internationale Veröffentlichungsnummer: WO9734754

(56) Entgegenhaltungen:
- EP-A- 0 165 750
- EP-A- 0 429 385
- DE-A- 2 437 241
- DE-A- 2 815 892
- DE-A- 3 304 076
- DE-A- 3 531 005
- GB-A- 2 145 194
- US-A- 4 823 450
- US-A- 5 484 370

## Beschreibung

Die Erfindung betrifft ein Verfahren zur Beeinflussung des Walzenspaltes eines Glättwerkes in einer Anlage zur Erzeugung oder/und Bearbeitung eines endlosen, ebenen Flächengebildes nach dem Oberbegriff des Anspruchs 1 sowie eine drehbar gelagerte Walze zur Durchführung dieses Verfahrens nach dem Oberbegriff der Ansprüche 11 oder 12.

Eine derartige Glättwerkwalze ist aus der DE 44 18 549 A1 bekannt.

Bombierte Walzen dienen in Zwei- und Mehrwalzensystemen dazu, die Durchbiegung konventioneller, zylindrischer Walzen längs des Walzenspalts zu kompensieren und über die Länge des Walzenspalts eine gleichmäßige Druckverteilung zu erreichen. Dabei wird üblicherweise das Ausmaß der auch mit Bombage bezeichneten Aufwölbung des Walzenmantels über die Walzenlänge für einen durch bestimmte Parameter festgelegten Belastungsfall berechnet und ausgeführt. Sie führt daher auch nur bei Verwendung entsprechend dem der Berechnung zugrundeliegenden Belastungsfall zu optimalen Ergebnissen und müßte daher bei veränderten Bedingungen an diese angepaßt werden können. Bombierte Walzen sind jedoch vielfach Vollkernwalzen, deren Mantel in einem aufwendigen Verfahren mit der entsprechend den zugrundegelegten Bedingungen festgelegter Aufwölbung gefertigt wird. Eine Anpassung an veränderte Betriebsdaten ist bei solchen Walzen nachträglich nicht möglich.

Von den unterschiedlichen Vorschlägen zur Kompensation der Walzendurchbiegung infolge der Belastung im Walzenspalt waren die meisten entweder von geringem Erfolg oder sehr aufwendig und konnten sich daher nicht durchsetzen.

Die Erfindung geht von der eingangs genannten DE 44 18 549 A1 aus. In dieser ist eine Walze, insbesondere Glättwerkwalze, beschrieben, bei der die Aufwölbung des Walzenmantels gezielt eingestellt und ohne Ausbau der Walze im Stillstand an veränderte Betriebsparameter angepaßt werden kann. Hierzu ist die Walze ein zwischen zwei Endscheiben druckdicht eingeschweißter, außen zylindrischer Hohlkörper, der mit einem inkompressiblen Medium gefüllt ist. Zur Erzeugung der Aufwölbung wird das inkompressible Medium unter Druck gesetzt. Hierzu sind in beiden Endscheiben Verschlußstopfen vorgesehen, die im Sinne einer Druckerhöhung oder -minderung axial in ihren Führungen verstellbar sind. Eine solche Verstellung zur Veränderung des Ausmaßes der Aufwölbung kann bei der bekannten Walze zwar feinfühlig und ohne Ausbau der Walze, jedoch nur während eines Maschinenstillstands erfolgen. Sie ist zur Einstellung einer über die Länge des Walzenspaltes gleichmäßigen Druckverteilung und zur Erzielung einer über die Breite des ebenen Flächengebildes gleichmäßigen Dicke notwendig. Ebene Flächengebilde im Sinn dieser Erfindung sind quasi endlose Bahnen aus elastomeren oder thermoplastischen Polymeren oder mit solchen Polymeren beschichtete oder kaschierte Bahnen, wie Folien-, Textil- oder Papierbahnen.

Um während des Betriebs den Verlauf der Foliendicke über die Breite der Folienbahn beeinflussen zu können, ist es, wie beispielsweise in der DE 35 31 005 C2 beschrieben, bekannt, durch die Maschinensteuerung die Austrittsgeometrie des Spritzwerkzeugs abhängig von Fehlersignalen eines Dickenmeßsystems, das fortlaufend oder in Intervallen die Foliendicke über die Breite der Folienbahn abtastet, im Sinne eines Ausgleichs der ermittelten Dickenabweichungen zu verändern. Dikkenschwankungen, die aus Abweichungen der Spaltweite zwischen den Glättwerkwalzen stammen, können dadurch jedoch nicht verhindert werden.

Bei dem geschilderten Stand der Technik liegt der Erfindung die technische Aufgabe zugrunde, eine Beeinflussung und Optimierung des sich unter Belastung verändernden Walzenspaltes zur Erzielung eines über die Bahnbreite gleichmäßigen Verlaufs der Dicke des extrudierten Flächengebildes auch während des Betriebs zu ermöglichen. Die Aufgabe wird bei einem gattungsgemäßen Verfahren durch die kennzeichnenden Merkmale des Anspruchs 1 gelöst.

Durch die Erfindung ist die Möglichkeit gegeben, - beispielsweise unter Beibehaltung der vorhergehend erwähnten Steuerung der Weite des Breitschlitzdüsenwerkzeuges - Änderungen des Drucks in der die Aufwölbung (Bombage) des Walzenmantels erzeugenden inkompressiblen Flüssigkeit und damit eine feinfühlige Nachregulierung der Walzenspaltgeometrie jederzeit auch während der laufenden Produktion oder Bearbeitung des Flächengebildes vorzunehmen. Dabei erfolgt eine Erhöhung oder Absenkung des Druckes in der Flüssigkeit zur Beeinflussung der Aufwölbung des Walzenmantels direkt oder indirekt durch eine Erhöhung oder Absenkung der Temperatur der Druckflüssigkeit. Diese Verfahrensweise überrascht durch ihre Einfachheit in der Ausführung, da keine größeren konstruktiven Probleme, wie Undichtigkeiten an Wellendurchführungen für eine unter hohem Druck stehende Flüssigkeit, gelöst werden müssen.

Erfindungsgemäß wird eine Temperierflüssigkeit zur Änderung der Aufwölbung des Walzenmantels vorgeschlagen, wobei die Temperierflüssigkeit bevorzugt durch den Ringraum zwischen Walzenmantel und Arbeitsfläche der Walze gepumpt und im Kreislauf geführt wird. Die Temperierflüssigkeit kann in ihrer Temperatur gesteuert und dadurch die Temperatur der die Bombage des Walzenmantels bewirkenden, im Druckraum eingeschlossenen Flüssigkeit erhöhen oder absenken. Diese Beeinflussung des Walzenspaltes ist sehr wirksam und günstig, da bei der konstruktiven Ausführung der Glättwalze als Kühlwalze diese nur noch mit den geeigneten Sensoren ausgestattet und der Heiz-/Kühlkreislauf in eine Regelung eingeschlossen werden muss, die durch die Maschinensteuerung geführt wird.

Eine Aufheizeinrichtung für die im Druckraum eingeschlossene Flüssigkeit ist grundsätzlich auch aus der US-A-4 823 450 bekannt geworden. Allerdings dient die Temperierung der Walze hier nicht der Veränderung der Durchbiegung der biegekompensierten Walze. Bezüglich des Aufbaus derartiger biegekompensierter Walzen wird auf vorbekannte Walzenformen pauschal verwiesen. Die Aufheizung dient hier lediglich dazu, eine außen sitzende zylinderförmige Hülse mit einem darunter befindlichen Walzenmantel während des Betriebs zu verspannen, indem der innere Walzenmantel mit größerem thermischen Ausdehnungskoeffizienten so erwärmt wird, dass der innenliegende Walzenmantel mit der aufgesteckten Hülse verspannt und in Triebverbindung gebracht werden kann. Soll die äußere Hülse gewechselt werden, so muss die Anlage stillgelegt und abgekühlt werden, damit die thermische Verspannung zwischen dem Walzenmantel und der außen sitzenden Hülse aufgehoben und nur die außen sitzende Hülse abgezogen und durch eine neue Hülse ersetzt werden kann. Im übrigen offenbart diese Vorveröffentlichung weder einen Fluidkreislauf, der das ständige Umpumpen einer Temperierflüssigkeit zur Steuerung und Regelung des im Inneren des Walzenkörpers befindlichen Druckmediums erlauben würde, noch eine Steuerung des Walzenspaltes. Der Offenbarungsgehalt dieser Vorveröffentlichung betrifft also eine völlig andersartige Problemstellung verbunden mit einer andersartigen Lösung.

Bei einer bevorzugten Ausgestaltung des Verfahrens erfolgt die Anhebung oder Absenkung der Temperatur der die Bombage bewirkenden Flüssigkeit in Abhängigkeit von er fortlaufend oder in Intervallen gemessenen Dicke der Bahn bzw. unter Einbeziehung der Abzugsgeschwindigkeit von dem ermittelten Flächengewicht und vorzugsweise mindestens einem weiteren Qualitätsmerkmal. Als Qualitätsmerkmal kann ein die Oberflächenbeschaffenheit kennzeichnender Meßwert von einem Sensor erfaßt und der Maschinensteuerung zugeführt werden, wo er mit hinterlegten Sollwerten verglichen wird, um bei unzulässigen Abweichungen insbesondere empirisch ermittelte Stellwertänderungen abzuleiten. Weitere Qualitätsmerkmale, die durch geeignete Sensoren erfaßbar sind, sind die Beanspruchung der Bahn im Walzenspalt zur Verhinderung einer Überglättung der Bahn mit auftretenden Walkmarkierungen oder einer Unterglättung der Bahn durch Lufteinzug wegen eines zu weiten Walzenspaltes. Der im Walzenspalt herrschende Druck oder die Spaltbelastung kann durch Kraftmeßdosen ermittelt werden, um eine erforderliche Korrektur durch Optimierung der Bombage der Glättwerkwalze zu bewerkstelligen. Optische Sensoren, die beispielsweise mit polarisiertem Licht arbeiten, können schließlich zur Erfassung mechanischer Beanspruchungen dienen und Meßwerte bereitstellen, die in der Maschinensteuerung verarbeitet werden und in Verbindung mit der Justierung des Walzenspaltes durch Optimierung der Bombage der Walze die Qualität der erzeugten oder/und bearbeiteten Warenbahn erhöhen.

Bei einer weiteren Ausgestaltung des Verfahrens kann die Korrektur der ermittelten Dickenabweichungen der Warenbahn dadurch erfolgen, daß die Veränderung des Druckes in der inkompressiblen Druckflüssigkeit durch Temperatursteuerung und die Düsenspaltverstellung - wie bereits oben erwähnt - miteinander kombiniert werden.

In einer Ausgestaltung des Verfahrens ist zur Änderung der Druckflüssigkeitstemperatur ein durch die Druckflüssigkeit geführter separater Heiz-/Kühlmittelkreis vorgesehen.

Um auch örtlich bzw. außerhalb des Mittelbereichs der Walze auftretende Dickenabweichungen durch gezielte Temperaturänderungen in der Druckflüssigkeit korrigieren zu können, wird bei einer weiteren Ausführung die Walze auf ihrer Länge in mindestens zwei, besser mindestens drei aneinandergrenzende axiale Bereiche aufgeteilt, in denen die Steuerung des Druckes der jeweiligen Druckflüssigkeit unabhängig vom benachbarten Bereich erfolgen kann.

Eine bevorzugte Vorrichtung zur Ausführung des erfindungsgemäßen Verfahrens ergibt sich durch die Weiterbildung der in der DE 44 18 549 A1 beschriebenen Walze. Bei dieser ist der Walzenmantel der die Aufwölbung aufweisenden Walze von einer kreisringförmigen, konzentrischen Arbeitsfläche mit Abstand umgeben. Diese stützt sich über einen auf der Außenfläche des Walzenmantels angebrachten Steg auf der Mantelfläche ab. Bei der bekannten Walze dient der Ringraum zwischen Mantel- und Arbeitsfläche, insbesondere der zwischen den Sützstegen ausgebildete Wendelkanal, der Kühlung der durch den Kontakt mit der Warenbahn, beispielsweise Folienbahn, aufgeheizten Arbeitsfläche. Er ist hierzu an ein Umwälzsystem für eine Heiz- oder Kühlflüssigkeit angeschlossen, das die Vorlauftemperatur der Heiz- oder Kühlflüssigkeit auf einem konstanten, voreingestellten Wert hält. Die Feinregelung des Verlaufs der Dicke der Warenbahn über ihre Breite erfolgt bei der bekannten Vorrichtung durch die Regelung des Spaltquerschnitts der die Bahn erzeugenden Breitschlitzdüse, und zwar in Abhängigkeit von Fehlersignalen, die bei der fortlaufenden Messung der Dicke der Warenbahn über ihre Bahnbreite anfallen.

Nun wurde gefunden, daß eine frisch erzeugte Folienbahn beim Erreichen des Walzenspaltes des Glättwerkes bereits so weit abgekühlt ist, daß geringe Änderungen der Kühltemperatur der Glättwalze, die zum Erzielen der erfindungsgemäßen Druckänderung in der inkompressiblen Flüssigkeit ausreichen, die Qualität des Erzeugnisses nicht stark beeinflussen. Daher wird erfindungsgemäß das bei der gattungsgemäßen Walze vorhandene Umwälzsystem für die den Ringraum durchströmende Heiz- oder Kühlflüssigkeit durch eine Regelung ergänzt, durch die die Vorlauftemperatur der den Ringraum durchströmenden Heiz- oder Kühlflüssigkeit eingestellt wird. Die Regelung erfolgt in Abhängigkeit von Fehlersignalen aus der Dickenmessung in Verbindung mit einem Qualitätsmerkmal im Sinne der Behebung der Dickenabweichnungen durch Optimierung der Bombage des Walzenmantels.

Eine weitere Ausführung betrifft eine Walze in einer Anlage, die sich von der vorhergehend beschriebenen dadurch unterscheidet, daß der die Aufwölbung aufweisende Walzenmantel die Arbeitsfläche ist. Hier fehlt also der Ringraum und damit auch das Umwälzsystem für die den Ringraum, insbesondere den Wendelkanal durchströmende Heiz- oder Kühlflüssigkeit. Hierbei ist erfindungsgemäß vorgesehen, daß die Walze mit einem Heiz- oder Kühlmittelkreis ausgestattet ist, der der Steuerung der Temperatur des inkompressiblen Druckmittels dient und einen Heizer/Kühler, einen Wärmeübertrager, eine Regelstrecke zur Steuerung der Vorlauftemperatur der Heiz-/Kühlflüssigkeit sowie Wärmeübertragungsflächen umfaßt, durch die die Temperatur der die Bombage der Walze bewirkenden Flüssigkeit erhöhbar oder absenkbar ist.

Dabei können die Wärmeübertragungsflächen zur Steuerung der Temperatur des inkompressiblen Druckmittels Rohre sein, die mit radialem Abstand von der Walzenachse verteilt sind und in den Endscheiben druckdicht enden oder an diese anstoßen. Sie verlaufen innerhalb des das Druckmittel enthaltenden Hohlraumes des Walzenmantels.

Bei einer anderen Ausgestaltung der erfindungsgemäßen Walze, die mit einem druckdicht in den Hohlkörper der Walze eingesetzten Walzenkern ausgerüstet ist, dessen axiale Endbereiche die Lagerzapfen bilden und jeweils über die axialen Endscheiben hinausreichen, können die Wärmeübertragungsflächen ähnlich wie die vorhergehend beschriebene Ausführung ausgebildet sein. Bei einer konstruktiv abgeänderten Lösung können sie jedoch auch auf dem Umfang des Walzenkerns mit geringem Abstand unter der Mantelfläche des Walzenkerns gleichmäßig verteilte, achsparallel angeordnete Längsbohrungen sein.

Um auch asymmetrisch über die Breite einer Warenbahn, insbesondere einer Folienbahn, auftretende Dickenfehler korrigieren zu können, ist bei einer Weiterbildung insbesondere der von einem Kühlmantel umgebenen Walze vorgesehen, den Ringraum des Walzenmantels und die Druckmittelkammer in axialer Richtung in mehrere Kammern zu unterteilen und miteinander paarweise zu verbinden, wobei die Paare mit jeweils zugeordneten Wärmeübertragern durch zugehörige Versorgungsleitungen verbunden sind.

Anhand eines in der beigegebenen Zeichnung dargestellten Ausführungsbeispiels wird die Erfindung erläutert.

Es zeigen:
- Fig. 1: eine Ausführung einer erfindungsgemäßen Walze mit Walzenkern und Wendelkanal für einen Temperierflüssigkeitsumlauf;
- Fig. 1A: Konstruktionsdetail der Ausführung nach Fig. 1;
- Fig. 2: eine Ausführung mit je einem Umwälzsystem für die Walzenkühlung und für die Beeinflussung des Druckes in dem inkompressiblen Druckmittel;
- Fig. 3: Detail aus Fig. 2 mit einer Darstellung der Verbindungen zwischen den außerhalb der Walze und den innerhalb der Walzenkonstruktion verlaufenden Teilen der Umwälzsysteme.
- Fig. 4: eine Ausführung der Walze ähnlich Fig. 1, jedoch mit jeweils in drei Längenabschnitte unterteilter Wendelkammer und Druckmittelkammer.

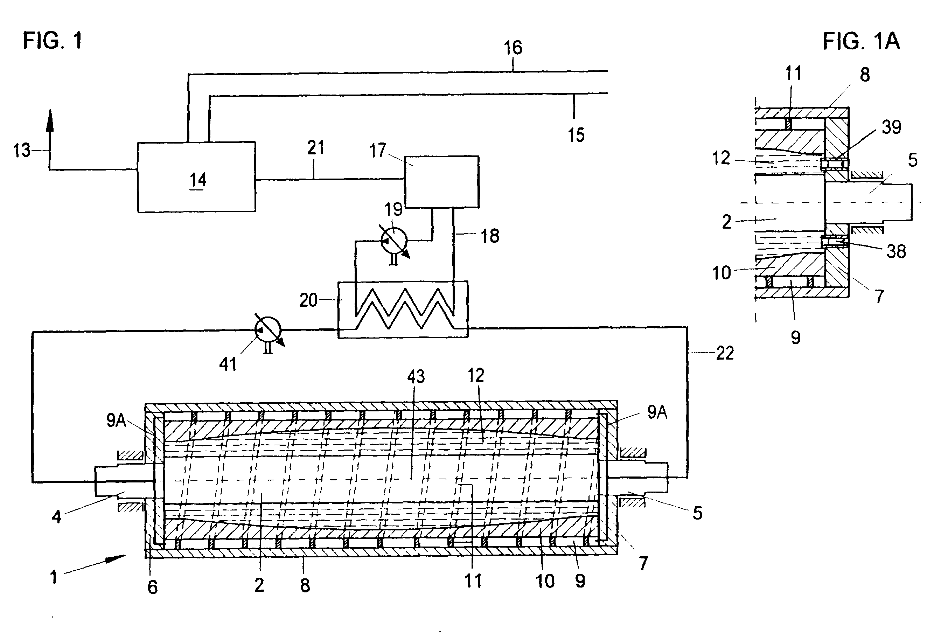

Die in Fig. 1 dargestellte Walze 1 stimmt in wesentlichen Teilen mit einer der in der eingangs genannten DE 44 18 549 A1 beschriebenen Ausführungen einer temperierbaren Walze überein, deren Bombage veränderbar ist. So hat die Walze zwei Endscheiben 6, 7, zwischen denen ein den Walzenmantel 10 bildender Hohlkörper druckdicht eingeschweißt ist. In den Hohlkörper ist ein Walzenkern 2 druckdicht derart eingesetzt, daß sich seine die Lagerzapfen 4, 5 bildenden Endbereiche durch Bohrungen in den Endscheiben 6, 7 über diese hinaus erstrecken. Um den Walzenmantel 10 ist eine zu letzterem konzentrische, kreiszylindrische Arbeitsfläche 8 vorgesehen, die zu beiden Seiten die Ränder der Endscheiben 6, 7 übergreift. Sie liegt auf einem sich seinerseits auf der Außenfläche des Walzenmantels 10 abstützenden wendelförmigen Steg 11, der in einem im Querschnitt kreisringförmigen Hohlraum 9 zwischen der Arbeitsfläche 8 und dem Walzenmantel 10 vorgesehen ist.

Der Zwischenraum zwischen dem Walzenkern 2 und dem Hohlkörper ist mit einem inkompressiblen Druckmittel 12 gefüllt, das zur Erzeugung einer in ihrem Betrag vorgegebenen Aufwölbung (Bombage) des Walzenmantels 10 unter entsprechend vorgegebenen Druck gesetzt wird. Die aus der DE 44 18 549 A1 bekannten, auch bei der Walze 1 anwendbaren Vorkehrungen sind zur Wahrung der Deutlichkeit der Zeichnung in der Fig. 1A dargestellt.

In die Endscheiben 6, 7 sind vorzugsweise mehrere Buchsen 39 druckdicht eingesetzt. Die Buchsen 39 sind mit Innengewinden versehen, in die Verschlußstopfen 38 eingesetzt sind. Durch Eindrehen oder Herausschrauben der Verschlußstopfen 38 ist es möglich, mit dem Innendruck auch die Aufwölbung des Walzenmantels 10 feinfühlig zu verändern. Dies kann jedoch nur bei Walzenstillstand geschehen. Es hat sich jedoch gezeigt, daß auch ein Bedürfnis besteht, während des Betriebs eines Glättwerkes mit mindestens einer solchen Walze eine Optimierung der Bombage des Walzenmantels auszuführen, besonders wenn durch Umgebungseinflüsse Änderungen der Verfahrensparameter verursacht werden.

Bei der in Fig. 1 gezeigten Ausführung der Erfindung wird eine Nachjustierung der Bombage des Walzenmantels 10 und der Arbeitsfläche dadurch erreicht, daß der bei der DE 44 18 549 A1 vorgesehene Kühler in dem Kreislauf für den umlaufenden Wärmeträger durch ein Heiz/Kühlaggregat 17 ersetzt wird, dessen Funktion durch Steuer- oder Regelsignale aus der über eine Steuerleitung 21 mit dem Aggregat 17 verbundenen Maschinensteuerung 14 geführt wird. Die Maschinensteuerung 14 wird ihrerseits über Signalleitungen 15 und 16 mit Signalen versorgt. Dabei ist die Leitung 15 mit einer nicht dargestellten, jedoch zum Stand der Technik gehörenden Einrichtung zur fortlaufenden Messung der Foliendicke, des Flächengewichtes der Folienbahn oder eines anderen Qualitätsmerkmals verbunden. Die Leitung 16 dagegen ist mit einem Drucksensor zur Überwachung des Druckes oder einem Termoelement zur Anzeige der aktuellen Temperatur (beide ebenfalls nicht dargestellt) in dem inkompressiblen Druckmittel 12 verbunden. Bei einer Erweiterung der Maschinensteuerung können auch noch weitere Meßleitungen vorgesehen sein, die relevante Meßwerte liefern, die in der Maschinensteuerung 14 mit dort hinterlegten Sollwertprofilen verglichen werden und aus denen bei unzulässigen Abweichungen Steuersignale für die Düsenspaltverstellung und das Heiz/Kühlaggregat 17 abgeleitet werden. Je eine Umwälzpumpe 19 im Primärkreis 18 und eine Pumpe 41 in dem Sekundärkreis 22, der den Wendelkanal des Hohlraums 9 sowie die in den Endscheiben 6, 7 vorgesehenen radialen Zuführungen 9A umfaßt, sorgt für eine gleichmäßige, ggf. aber auch, von den Regelsignalen abhängige, bedarfsorientierte (Volumenstromregelung) Strömung im Primär- und im Sekundärkreis. Der Primär- und Sekundärkreis sind durch einen gemeinsamen Wärmeübertrager 20 miteinander funktionell verbunden.

An der Maschinensteuerung 14 ist auch eine Steuerleitung 13 zu einer nicht dargestellten Breitschlitzdüse angeschlossen, durch welche die Stellglieder für die Einstellung des Düsenspaltes - wie im Stand der Technik (z.B. DE 35 31 005 C) an sich bekannt - betätigbar sind.

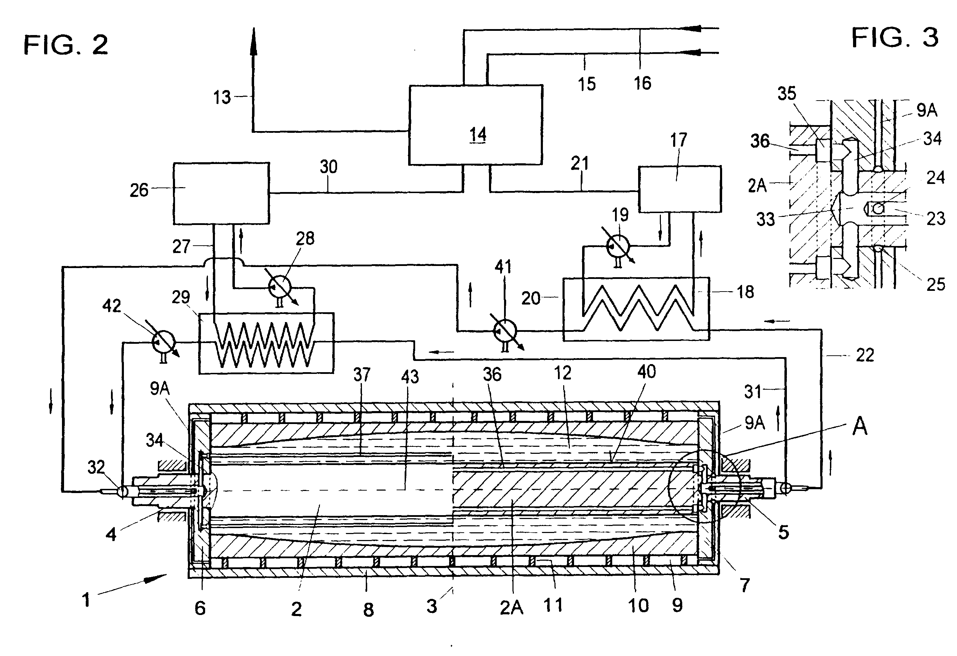

Die Figuren 2 und 3 zeigen weitere Ausführungen der Walze 1 mit einstellbarer Bombage des Walzenmantels, bei denen zur Ausführung der Drucksteuerung des inkompressiblen Druckmittels 12 ein separater Heiz- oder Kühlmittelkreis 26 bis 36 bzw. 26 bis 35 und 37 vorgesehen ist, während der aus der DE 44 18 549 A1 bekannte Kühlkreis 9, 17 bis 22 erhalten bleibt.

Die Fig. 2 zeigt zwei Varianten der erfindungsgemäßen Walze 1, bei der ein durch einen zweiten Heiz/Kühlkreis ergänzter Kreislauf einen Walzenkern 2, die Endscheiben 6, 7 und die die Lagerzapfen 4, 5 bildenden Endbereiche axial durchdringt. Bei beiden ist eine unmittelbare Steuerung der Temperatur des Druckmittels 12 vorgesehen. In der Ausführung der rechten Hälfte der Fig. 2 weist der Walzenkern 2 auf seinem Umfang verteilte, mit kurzem radialen Abstand von seiner Umfangsfläche 40 im Walzenkern 2 vorgesehene, mindestens über die Länge des Walzenmantels 10 reichende achsparallele Bohrungen 36 auf, während in der links der Trennlinie 3 dargestellten Ausführung außerhalb des Walzenkerns 2 mit geringem radialen Abstand von der Umfangsfläche 40 achsparallele Rohre 37 vorgesehen sind, die in oder an den Endscheiben 6, 7 enden und mit den Endscheiben druckdicht verbunden sind.

Die Verbindung der Bohrungen 36 bzw. der Rohre 37 mit dem Heiz/Kühlkreis 26 bis 36 bzw. 26 bis 35 und 37 erfolgt, wie in Fig. 3 dargestellt, über die Lagerzapfen 4, 5. Der zwischen den Stegen 9 gebildete Wendelkanal ist über Radialanschlüsse 9A mit dem ersten Heiz-/Kühlkreis verbunden. Sie sind über die zu den Ringkanälen 25 führenden Stichkanäle 24 an den in den Lagerzapfen 4, 5 vorgesehenen Rohrabschnitten 23 angeschlossen, die mit der Leitung 22 verbunden sind. Ferner sind in den Lagerzapfen 4, 5 Sackbohrungen 33 vorgesehen, die mit der Leitung 31 des Heiz-/Kühlkreises 26 bis 36 bzw. 26 bis 35 und 37 verbunden sind. Von den Bohrungen 33 führen Radialkanäle 34 zu den Ringkanälen 35, in denen die in dem Walzenkern 2 vorgesehenen Axialbohrungen 36 münden bzw. (s. linke Hälfte der Fig. 2) mit denen die axial verlaufenden Rohre 37 druckdicht verbunden sind. Beide Lösungen sind zwar durch den zusätzlichen Heiz-/Kühlkreis zur unmittelbaren Temperatur-/Drucksteuerung des eingeschlossenen Druckmittels aufwendiger als die Ausführung der Fig. 1, haben jedoch den Vorteil, daß wegen der wesentlich kürzeren Wege für die Wärmeübertragung auch bedeutend schnellere Reaktionen der Temperatur und dadurch des Druckes in dem inkompressiblen Druckmittel 12 erfolgen, wenn durch die Maschinensteuerung 14 Korrekturen des Walzenspaltes infolge einer Nachjustierung der Bombage des Walzenmantels erfolgen.

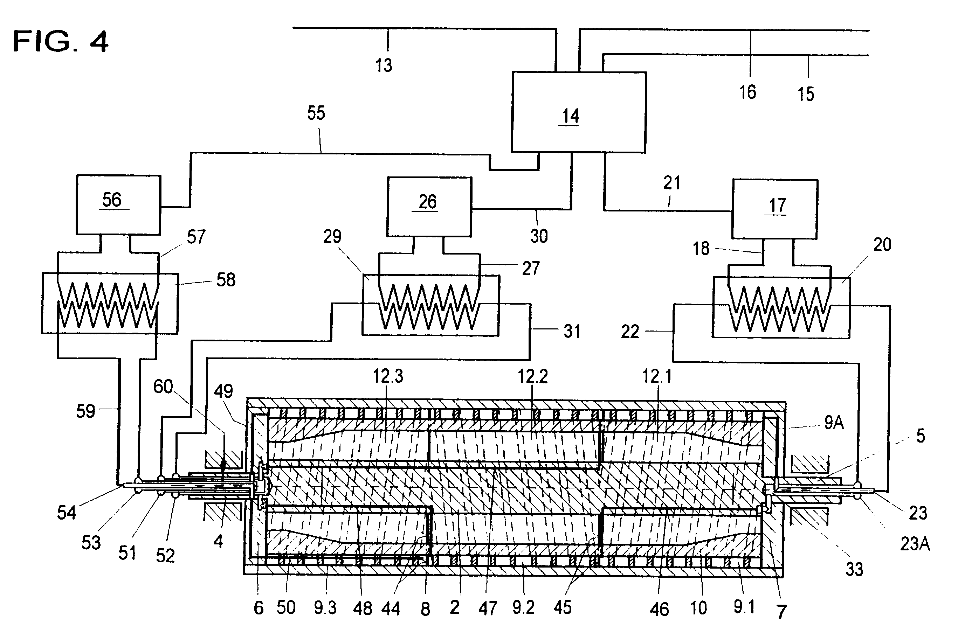

Die Fig. 4 schließlich zeigt eine Weiterbildung der in Fig. 1 gezeigten Walze, bei der auch die Möglichkeit besteht, asymmetrisch, d.h. außermittig auftretende Dickenschwankungen durch Beeinflussung des Walzenspaltes gezielt zu korrigieren. Hierzu sind bei der dargestellten Ausführung der Hohlraum 9 und die das Druckmittel 12 einschließende Kammer jeweils durch gemeinsame radiale Trennwände 44, 45 in drei axiale Abschnitte 9.1, 9.2, 9.3 und 12.1, 12.2, 12.3 unterteilt. Jeder Kammerpaarung 9.1, 12.1; 9.2, 12.2 und 9.3, 12.3 ist mit einem eigenen Heiz/Kühlkreislauf 17 bis 23, 26 bis 31, 51, 52 und 53 bis 59 verbunden; die in Fig. 2 dargestellten Umwälzpumpen sind in Fig. 4 aus Vereinfachungsgründen nicht gezeigt. Die Temperiereinrichtungen 17, 26 und 56 werden von der zentralen Maschinensteuerung 14 jeweils einzeln abhängig von den Fehlersignalen gesteuert, die über die Signalleitungen 15 von den Sensoren für das Flächengewicht die Qualitätsmerkmale, den Druck im Walzenspalt etc. geliefert werden.

Die Versorgung der drei Kammerpaarungen 9.1, 12.1; 9.2, 12.2 und 9.3, 12.3 mit dem jeweiligen Temperiermittel erfolgt über die beiden Lagerzapfen 4 und 5, wobei ausdrücklich darauf hinzuweisen ist, daß insbesondere die Darstellungen in Fig. 4 schematisch sind, die die Temperierkreisläufe und die Leitungsdurchführungen, die mit der Bezugszahl 60 gekennzeichnet sind, betreffen; sie sollen allein der Erläuterung dienen und können nicht als konstruktive Hinweise gelten.

Bei der dargestellten Ausführung ergeben sich, wie zu erkennen ist, jeweils die Kreisläufe 22 - 23 - 9A - 9.1 - 46 - 33 - 22, 31 - 51 - 47 - 9.2 - 48 - 52 und 59 - 53 - 49 - 9.3 - 50 - 54 - 59. Die Leitung 50 des letzten Kreislaufs ist dabei, ebenso wie die Leitung 49, in der Endscheibe 6 bis zum Hohlraum 9.3 geführt, wobei die Leitung 50 im Hohlraum 9.3 vor der Trennwand 44 endet, während die Leitungen 46 bis 48 bis zu den jeweiligen Walzenabschnitten als Bohrungen im Walzenkern 2 verlaufen und von dort radial zu den Kammerpaarungen 9.1, 12.1 und 9.2, 12.2 geführt sind.

Zur Wahrung der Übersichtlichkeit wurde darauf verzichtet, in den Endscheiben 6, 7 auch die Verschlußstopfen 38 und die zugehörigen Gewindebuchsen 39 (Fig. 1A) darzustellen. Eine Möglichkeit zur Druckeinstellung in der mittleren Kammer ist ebenfalls nicht dargestellt. Eine Anordnung von Verschlußstopfen 38 und Gewindebuchsen 39 der in Fig. 1A dargestellten Art ist bei dieser zwar nicht möglich, die Druckeinstellung kann jedoch beispielsweise ebenfalls durch einen in ähnlicher Weise verschließbaren, zur mittleren Druckmittelkammer 12.2 geführten Kanal im Walzenkern 2 erfolgen.

### BEZUGSZEICHENAUFSTELLUNG

- 1: Walze, Glättwerkwalze
- 2: Walzenkern, Kern
- 3: Trennlinie
- 4: Lagerzapfen
- 5: Lagerzapfen
- 6: Endscheibe
- 7: Endscheibe
- 8: Außenmantel, Arbeitsfläche
- 9: Hohlraum, Ringraum, Wendelkanal
- 10: Hohlkörper, Walzenmantel
- 11: Steg, Wendel, gewendelter Steg
- 12: Druckflüssigkeit, Druckmittel
- 12.1-12.3: Druckmittelkammer
- 13: Steuerleitung
- 14: Maschinensteuerung
- 15: Signalleitung
- 16: Signalleitung
- 17: Kühler, Temperiereinrichtung
- 18: Leitung
- 19: Pumpe, Umwälzpumpe
- 20: Wärmeübertrager
- 21: Steuerleitung
- 22: Leitung
- 23: Anschluß, Kühlflüssigkeitsanschluß
- 24: Radialkanal
- 25: Ringkanal
- 26: Temperiereinrichtung
- 27: Leitung
- 28: Pumpe, Umwälzpumpe
- 29: Wärmeübertrager
- 30: Steuerleitung
- 31: Leitung
- 32: Anschluß
- 33: Verteiler
- 34: Radialkanal
- 35: Verteilerkammer, Ringkanal
- 36: Temperierbohrung
- 37: Temperierrohr
- 38: Verschlußstopfen
- 39: Buchse
- 40: Mantelfläche des Walzenkerns
- 41: Pumpe, Umwälzpumpe
- 42: Pumpe, Umwälzpumpe
- 43: Achse, Walzenachse
- 44: Trennwand
- 45: Trennwand
- 46: Leitung
- 47: Leitung
- 48: Leitung
- 49: Leitung
- 50: Leitung
- 51: Anschluß
- 52: Anschluß
- 53: Anschluß
- 54: Anschluß
- 55: Steuerleitung
- 56: Temperiereinrichtung
- 57: Leitung
- 58: Wärmeübertrager
- 59: Leitung
- 60: Leitungsdurchführungen

## Patentansprüche

1. Verfahren zur Beeinflussung des Walzenspaltes eines Glätt- werkes in einer Anlage zur Erzeugung oder/und Bearbeitung eines endlosen, ebenen Flächengebildes, insbesondere einer Folienbahn aus einem plastifizierbaren Kunststoff,
bei dem die Bahn kontinuierlich durch einen sich unter Belastung verändernden Walzenspalt hindurchgeführt wird, der zwischen zwei angetriebenen Walzen gebildet ist und bei dem mindestens an einer der Walzen die Bombage des Walzenmantels mit Mitteln veränderbar ist, die eine Druckbeaufschlagung des Innenraumes der Walze mit einer im wesentlichen inkompressiblen Flüssigkeit umfassen,
dadurch gekennzeichnet, daß
die Beeinflussung und Optimierung des Walzenspaltes durch Steuerung des Druckes der die Bombage der Walze bewirkenden Flüssigkeit erfolgt, indem die Temperatur der Flüssigkeit erhöht oder abgesenkt wird, und daß der Walzenmantel der mindestens einen den Walzenspalt bildenden Walze von einer Temperierflüssigkeit durchströmt wird und
daß die Temperatur der Temperierflüssigkeit geregelt wird.

2. Verfahren nach Anspruch 1,
dadurch gekennzeichnet, daß
die Beeinflussung und Optimierung des Walzenspaltes in Abhängigkeit von der fortlaufend über die Breite der Bahn ermittelten Dicke der Bahn und vorzugsweise mindestens einem weiteren Qualitätsmerkmal erfolgt.

3. Verfahren nach Anspruch 2,
dadurch gekennzeichnet, daß
das Qualitätsmerkmal ein Meßwert für die Oberflächenbeschaffenheit der Bahn ist.

4. Verfahren nach Anspruch 2,
dadurch gekennzeichnet, daß
das Qualitätsmerkmal ein Meßwert für die Beanspruchung der Bahn im Walzenspalt ist.

5. Verfahren nach Anspruch 4,
dadurch gekennzeichnet, daß
der auf die laufende Bahn ausgeübte Spaltdruck im Walzenspalt gemessen wird und daß bei einer Abweichung von einem vorgegebenen und in der Maschinensteuerung hinterlegten Sollwertprofil die Bombage der Walze durch Nachregelung der Temperatur der Temperierflüssigkeit verändert wird.

6. Verfahren nach Anspruch 3,
dadurch gekennzeichnet, daß
ein optischer Sensor das Qualitätsmerkmal der laufenden Bahn erfaßt und einen Meßwert erzeugt,
daß von einem Vergleicher die Abweichungen von einem Sollwertprofil ermittelt und an die Maschinensteuerung geleitet werden und
daß durch die Maschinensteuerung die Temperatur der Temperierflüssigkeit nachgeregelt wird.

7. Verfahren nach einem der Ansprüche 1 bis 6,
dadurch gekennzeichnet, daß
die Einstellung des Walzenspaltes durch motorische Einstellung auf eine durch die Dicke der Warenbahn bestimmte Spaltweite erfolgt und
daß bei einer durch Sensoren ermittelten Abweichung der Dicke der Warenbahn oder eines Qualitätsmerkmals der Warenbahn im laufenden Betrieb eine Korrektur der Spaltweite durch Beeinflussung der Bombage der Walze, vorzugsweise durch Nachregelung der Temperatur der umlaufenden Temperierflüssigkeit, erfolgt.

8. Verfahren nach Anspruch 7 mit einer Breitschlitzdüse zur Extrusion eines Flächengebildes,
dadurch gekennzeichnet, daß
die Korrektur der ermittelten Abweichungen der Dicke der Warenbahn und/oder des Qualitätsmerkmals durch Erhöhung oder Absenkung des Druckes in der inkompressiblen Flüssigkeit im Innenraum der Walze durch eine Erhöhung oder Absenkung der Temperatur dieser Flüssigkeit in Verbindung mit einer Düsenspaltverstellung an der Breitschlitzdüse erfolgt.

9. Verfahren nach Anspruch 1,
dadurch gekennzeichnet, daß
zur Änderung der Druckmitteltemperatur ein durch das Druckmittel hindurch geführter Heiz-/Kühlmittelkreis vorgesehen ist.

10. Verfahren nach Anspruch 9,
dadurch gekennzeichnet, daß
zur örtlichen Beeinflussung des Walzenspaltes die Walze über ihre axiale Länge in mindestens zwei aneinandergrenzende Bereiche unterteilt ist und daß diesen Heiz-/Kühlmittelkreise zugeordnet sind, deren Temperaturen durch die Maschinensteuerung geregelt werden.

11. Drehbar gelagerte Walze (1), insbesondere Glättwerkwalze (1) in einer Anlage zur Erzeugung oder/und Bearbeitung endloser, ebener Flächengebilde, die mit einer zweiten Walze einen Walzenspalt bildet und aus zwei in Achsrichtung verlaufenden Walzenzapfen (4, 5), zwei Endscheiben (6, 7) und einem zwischen den Endscheiben (6, 7) druckdicht eingeschweißten, den Walzenmantel bildenden Hohlkörper (10) besteht, der in Walzenlängsrichtung eine durch Druckbeaufschlagung mit einem inkompressiblen Druckmittel erzeugbare konvexe Aufwölbung aufweist und die eine den Walzenmantel mit Abstand konzentrisch umgebende, im Querschnitt kreisringförmige Arbeitsfläche (8) aufweist, wobei die Arbeitsfläche (8) sich über einen auf der Mantelfläche des Walzenmantels angebrachten Steg (11) auf dem Walzenmantel abstützt und der eingeschlossene Ringraum an ein Umwälzsystem (17 - 22) für eine Heiz- oder Kühlflüssigkeit anschließbar ist, zur Durchführung des Verfahrens nach Anspruch 1,
dadurch gekennzeichnet, daß
das einen Heizer/Kühler (17) und einen Wärmeübertrager (20) umfassende Umwälzsystem (17-22) für die den Ringraum (9) durchströmende Heiz- oder Kühlflüssigkeit in eine Regelstrecke (14 - 17) eingeschlossen ist, wobei die Temperatur der Heiz- oder Kühlflüssigkeit in Abhängigkeit von Fehlersignalen, wie Dickenabweichnungen über die Breite des laufenden Flächengebildes und mindestens eines Qualitätsmerkmals in dem Sinne regelbar ist, daß eine Beeinflussung und Optimierung des Walzenspaltes durch Erhöhung oder Absenkung des Druckes des die Bombage bewirkenden inkompressiblen Druckmittels erfolgt.

12. Drehbar gelagerte Walze (1), insbesondere Glättwerkwalze (1) in einer Anlage zur Erzeugung oder Bearbeitung endloser, ebener Flächengebilde, die mit einer zweiten Walze einen Walzenspalt bildet und aus zwei in Achsrichtung verlaufenden Walzenzapfen (4, 5), zwei Endscheiben (6, 7) und einem zwischen den Endscheiben (6, 7) druckdicht eingeschweißten, den Walzenmantel (10) bildenden Hohlkörper (10) besteht, der in Walzenlängsrichtung eine durch Druckbeaufschlagung mit einem inkompressiblen Druckmittel erzeugte konvexe Aufwölbung aufweist zur Durchführung des Verfahrens nach Anspruch 1,
dadurch gekennzeichnet, daß
die Walze (1) in einen Heiz- oder Kühlmittelkreis (26 bis 36; 26 bis 35 und 37) zur Steuerung der Temperatur des inkompressiblen Druckmittels im Sinne einer Bombageänderung des Walzenmantels durch eine Druckänderung eingeschlossen ist und
daß der Heiz- oder Kühlmittelkreis einen Heizer/Kühler (26), einen Wärmeübertrager (29) sowie eine Regelstrecke (14 - 16, 26, 30) zur Einstellung der Vorlauftemperatur des Heiz- oder Kühlmittels in Abhängigkeit von Fehlersignalen aus gemessenen Dickenabweichungen über die Breite des laufenden Flächengebildes und mindestens eines Qualitätsmerkmals umfaßt.

13. Walze nach Anspruch 11 oder 12,
dadurch gekennzeichnet, daß
der Heiz- oder Kühlmittelkreis (26 - 35, 37) zur Steuerung der Temperatur des inkompressiblen Druckmittels Rohre (37) umfaßt, die innerhalb des das inkompressible Druckmittel (12) enthaltenden Druckraumes im Walzenmantel (10) verlaufen, mit radialem Abstand von der Walzenachse (43) angeordnet sind und in den Endscheiben (6, 7) enden oder an diese anstoßen.

14. Walze nach Anspruch 11 oder 12 mit einem druckdicht in den Walzenmantel (10) eingesetzten und mit seinen axialen, die Lagerzapfen (4, 5) bildenden Endbereichen über die Endscheiben (6, 7) hinausreichenden Walzenkern (2),
dadurch gekennzeichnet, daß
der Heiz- oder Kühlmittelkreis (26 - 35, 37) zur Steuerung der Temperatur des inkompressiblen Druckmittels Rohre (37) umfaßt, die mit geringem Abstand von der Mantelfläche (40) des Walzenkerns (2), um den Walzenkern (2) herum verteilt, angeordnet sind und in den Endscheiben (6, 7) enden oder an diese anstoßen.

15. Walze nach Anspruch 11 oder 12 mit einem druckdicht in den Walzenmantel (10) eingesetzten und mit seinen axialen, die Lagerzapfen (4, 5) bildenden Endbereichen über die Endscheiben (6, 7) hinausreichenden Walzenkern (2),
dadurch gekennzeichnet, daß
der Heiz- oder Kühlmittelkreis (26 bis 35, 37) zur Steuerung der Temperatur des inkompressiblen Druckmittels über den Umfang des Walzenkerns (2) verteilte, achsparallele und mit geringem Abstand unter der Mantelfläche (40) des Walzenkerns (2) angeordnete Längsbohrungen (36) umfaßt.

16. Walze nach Anspruch 11 oder 12 mit einem druckdicht in den Walzenmantel (10) eingesetzten Walzenkern (2), der mit seinen axialen, die Lagerzapfen (4, 5) bildenden Endbereichen über die Endscheiben (6, 7) hinausreicht,
dadurch gekennzeichnet, daß
der das inkompressible Druckmittel enthaltende Druckraum (12) und der von der Heiz-/Kühlflüssigkeit durchströmbare Ringraum (9) in axialer Richtung in mehrere Druckräume (12.1, 12.2, 12.3) und Ringräume (9.1, 9.2, 9.3) unterteilt sind, wobei jeweils ein Druckraum und ein Ringraum eine Kammerpaarung (9.1, 12.1; 9.2, 12.2; 9.3, 12.3) bilden, die mit einem zugeordneten Wärmeübertrager (17; 26; 56) und einer Versorgungsleitung (22; 31; 59) in einen unabhängig von den anderen temperatursteuerbaren Heiz- oder Kühlmittelkreis eingeschlossen ist.

## Claims

1. Method of influencing a calender nip in a plant for producing and/or processing an endless, planar sheet-like structure, in particular a film web made of a plasticizable plastic,
in which the web is led continuously through a nip which changes under load, which is formed between two driven rolls and in which, in at least one of the rolls, the camber of the roll jacket can be changed using means which comprise applying pressure to the interior of the roll using an essentially incompressible fluid,
characterized in that the nip is influenced and optimized by controlling the pressure of the fluid which effects the cambering of the roll, by raising or lowering the temperature of the fluid, and that
the roll jacket of the at least one roll forming the nip has a temperature control fluid flowing through it, and in that the temperature of the temperature control fluid is controlled.

2. Method according to Claim 1,
characterized in that
the nip is influenced and optimized as a function of the thickness of the web, which is ascertained continuously over the width of the web, and preferably of at least one further quality feature.

3. Method according to Claim 2,
characterized in that
the quality feature is a measured value of the surface finish of the web.

4. Method according to Claim 2,
characterized in that
the quality feature is a measured value of the stress on the web in the nip.

5. Method according to Claim 4,
characterized in that
the nip pressure exerted on the running web in the nip is measured and in that, if there is a deviation from a desired value profile, which is predefined and stored in the machine control system, the camber of the roll is changed by readjusting the temperature of the temperature control fluid.

6. Method according to Claim 3,
characterized in that
an optical sensor registers the quality feature of the running web and generates a measured value,
in that a comparator ascertains the deviations from a desired value profile and conducts them to the machine control system,
and in that the machine control system readjusts the temperature of the temperature control fluid.

7. Method according to one of Claims 1 to 6,
characterized in that
the nip is set by motorized setting to a nip width that is determined by the thickness of the product web and in that if there is a deviation, ascertained by sensors, in the thickness of the product web or in a quality feature of the product web during continuous operation, the nip width is corrected by influencing the camber of the roll, preferably by readjusting the temperature of the circulating temperature control fluid.

8. Method according to Claim 7, with a slot die for extruding a sheet-like structure,
characterized in that
the ascertained deviations in the thickness of the product web and/or the quality feature are corrected by raising or lowering the pressure in the incompressible fluid in the interior of the roll by raising or lowering the temperature of this fluid, in conjunction with adjusting the die gap at the slot die.

9. Method according to Claim 1,
characterized in that
in order to change the pressure-medium temperature, a heating/cooling-medium circuit is provided, through which the pressure medium is led.

10. Method according to Claim 9,
characterized in that
in order to influence the nip locally, the roll is subdivided over its axial length into at least two adjoining regions and
in that these regions are assigned heating/cooling-medium circuits, whose temperatures are regulated by the machine control system.

11. Rotatably mounted roll (1), in particular calender roll (1), in a plant for producing and/or processing endless, planar sheet-like structures, the roll forming a nip with a second roll and comprising two roll journals (4, 5) which extend in the axial direction, two end disks (6, 7) and a hollow body (10) which is welded in a pressure-tight manner between the end disks (6, 7), forms the roll jacket and, in the roll longitudinal direction, has a convex bulge that can be produced by applying pressure, using an incompressible pressure medium, and the roll having a working face (8) of circular ring shape which surrounds the roll jacket concentrically and a distance, the working face (8) being supported on the roll jacket via a web (11) that is fitted to the outer face of the roll jacket and it being possible for the enclosed annular space to be connected to a circulating system (17-22) for a heating or cooling fluid, in order to implement the method according to Claim 1,
characterized in that
the circulating system (17-22) comprising a heater/cooler (17) and a heat exchanger (20) for the heating or cooling fluid flowing through the annular space (9) is included in a controlled system (14-17), it being possible to regulate the temperature of the heating or cooling fluid as a function of error signals, such as thickness deviations over the width of the running sheet-like structure and of at least one quality feature, with the effect that the nip is influenced and optimized by raising or lowering the pressure of the incompressible pressure medium which effects the cambering.

12. Rotatably mounted roll (1), in particular calender roll (1), in a plant for producing and/or processing endless, planar sheet-like structures, the roll forming a nip with a second roll and comprising two roll journals (4, 5) which extend in the axial direction, two end disks (6, 7) and a hollow body (10) which is welded in a pressure-tight manner between the end disks (6, 7), forms the roll jacket and, in the roll longitudinal direction, has a convex bulge that is produced by applying pressure, using an incompressible pressure medium, in order to implement the method according to Claim 1,
characterized in that
the roll (1) is included in a heating- or cooling-medium circuit (26 to 36; 26 to 35 and 37) for controlling the temperature of the incompressible pressure medium with the effect of changing the camber of the roll jacket as a result of a pressure change, and
in that the heating- or cooling-medium circuit comprises a heater/cooler (26), a heat exchanger (29) and a controlled system (14-16, 26, 30) for setting the flow temperature of the heating or cooling medium as a function of error signals from measured thickness deviations over the width of the running sheet-like structure and of at least one quality feature.

13. Roll according to Claim 11 or 12,
characterized in that
the heating- or cooling-medium circuit (26-35, 37) for controlling the temperature of the incompressible pressure medium comprises pipes (37), which run inside that pressure space in the roll jacket (10) which contains the incompressible pressure medium (12), are arranged with a radial spacing from the roll axis (43) and end in the end disks (6, 7) or abut the latter.

14. Roll according to Claim 11 or 12, having a roll core (2) which is inserted in a pressure-tight manner into the roll jacket (10) and, by way of its axial end regions that form the bearing journals (4, 5), reach beyond the end disks (6, 7),
characterized in that
the heating- or cooling-medium circuit (26-35, 37) for controlling the temperature of the incompressible pressure medium comprises pipes (37), which are arranged at a small distance from the outer face (40) of the roll core (2), are distributed around the roll core (2), and end in the end disks (6, 7) or abut the latter.

15. Roll according to Claim 11 or 12, having a roll core (2) which is inserted in a pressure-tight manner into the roll jacket (10) and, by way of its axial end regions that form the bearing journals (4, 5), reach beyond the end disks (6, 7),
characterized in that
the heating- or cooling-medium circuit (26 to 35, 37) for controlling the temperature of the incompressible pressure medium comprises longitudinal bores (36) which are distributed over the circumference of the roll core (2), are axially parallel and are arranged at a small distance below the outer face (40) of the roll core (2).

16. Roll according to Claim 11 or 12, having a roll core (2) which is inserted in a pressure-tight manner into the roll jacket (10) and, by way of its axial end regions that form the bearing journals (4, 5), reaches beyond the end disks (6, 7),
characterized in that
the pressure space (12) that contains the incompressible pressure medium and the annular space (9) through which the heating/cooling fluid can flow are subdivided in the axial direction into a plurality of pressure spaces (12.1, 12.2, 12.3) and annular spaces (9.1, 9.2, 9.3), in each case a pressure space and an annular space forming a pair of chambers (9.1, 12.1; 9.2, 12.2; 9.3, 12.3) which, together with an associated heat exchanger (17; 26; 56) and a supply line (22; 31; 59), are included in a heating or cooling circuit whose temperature can be controlled independently of the others.

## Revendications

1. Procédé pour influer sur l'emprise des cylindres d'une calandre dans une installation pour la fabrication et/ou la transformation d'une structure plane sans fin, en particulier une nappe de film en matière plastique susceptible d'être plastifiée,
dans lequel la nappe est passée en continu à travers une emprise qui se modifie sous charge, ladite emprise étant formée entre deux cylindres entraînés, et dans lequel le bombement de l'enveloppe de l'un au moins des cylindres est modifiable à l'aide de moyens qui réalisent la mise sous pression de l'espace intérieur du cylindre avec un liquide sensiblement incompressible,
caractérisé en ce que
l'influence et l'optimisation de l'emprise des cylindres a lieu par commande de la pression du liquide qui provoque le bombement des cylindres, par augmentation ou abaissement de la température du liquide, et en ce que
l'enveloppe de l'un au moins des cylindres qui forme l'emprise est traversée par un liquide d'équilibrage, et la température dudit liquide d'équilibrage est régulée.

2. Procédé selon la revendication 1, caractérisé en ce que
l'influence et l'optimisation de l'emprise a lieu en fonction de l'épaisseur de la nappe, que l'on détermine en continu sur la largeur de la nappe, et de préférence en fonction d'au moins un autre paramètre de qualité.

3. Procédé selon la revendication 2, caractérisé en ce que
le paramètre de qualité est une valeur de métrologie pour la qualité de surface.

4. Procédé selon la revendication 2, caractérisé en ce que
le paramètre de qualité est une valeur de métrologie pour la sollicitation de la nappe dans l'emprise.

5. Procédé selon la revendication 4, caractérisé en ce que
la pression exercée sur la nappe en circulation dans l'emprise est mesurée, et en ce que lors d'une déviation vis-à-vis d'un profil de valeurs de consigne prédéterminé et mémorisé dans la commande de la machine, le bombement des cylindres est modifié par suivi de régulation de la température du liquide d'équilibrage.

6. Procédé selon la revendication 3, caractérisé en ce que
un capteur optique détecte le paramètre de qualité de la nappe en circulation et produit une valeur de métrologie, en ce que
les écarts par rapport à un profil de valeurs de consigne sont déterminés par un comparateur et amenés à la commande de la machine, et en ce que
la température du liquide d'équilibrage est régulée par la commande de la machine.

7. Procédé selon l'une des revendications 1 à 6, caractérisé en ce que
le réglage de l'emprise entre les cylindres a lieu par réglage motorisé jusqu'à une dimension de l'emprise déterminée par l'épaisseur de la nappe de matériau, et en ce que lors d'un écart, déterminé par des capteurs, dans l'épaisseur de la nappe de matériau, ou dans l'un des paramètres de qualité de la nappe, on procède en fonctionnement continu à une correction de l'emprise par influence du bombement des cylindres, de préférence par suivi de régulation de la température du liquide d'équilibrage en circulation.

8. Procédé selon la revendication 7, comprenant une tuyère à fente large pour l'extrusion d'une structure plane, caractérisé en ce que
la correction des écarts déterminés dans l'épaisseur de la nappe de matériau et/ou dans le paramètre de qualité, a lieu par élévation ou abaissement de la pression dans le liquide incompressible dans le volume intérieur des cylindres, par augmentation ou abaissement de la température de ce liquide en combinaison avec une modification de la fente de tuyère dans la tuyère à fente large.

9. Procédé selon la revendication 1, caractérisé en ce que
pour modifier la température du liquide sous pression, on prévoit un circuit de chauffage/refroidissement qui traverse le liquide sous pression.

10. Procédé selon la revendication 9, caractérisé en ce que
pour influer localement sur l'emprise, les cylindres sont subdivisés sur leur longueur axiale en au moins de deux zones juxtaposées, et en ce que
auxdites zones sont associés des circuits de chauffage/refroidissement, dont les températures sont régulées par la commande de la machine.

11. Cylindre monté en rotation (1), en particulier cylindre de calandre (1) dans une installation pour la production et/ou la transformation de structures planes sans fin, qui forme une emprise avec un deuxième cylindre, et formé par deux tourillons de cylindre (4,5) qui s'étendent en direction axiale, par deux disques d'extrémité (6,7), et par un corps creux (10) soudé de manière étanche à la pression et formant l'enveloppe du cylindre, ledit corps creux présentant dans la direction longitudinale du cylindre un bombement convexe susceptible d'être produit par alimentation en pression au moyen d'un fluide incompressible, et comprenant une surface de travail (8) qui entoure l'enveloppe de cylindre à distance et de manière concentrique, avec en section transversale une forme circulaire, dans lequel la surface de travail (8) s'appuie sur le l'enveloppe du cylindre au moyen d'une barrette (11) appliquée sur la surface enveloppe de l'enveloppe de cylindre, et l'espace annulaire enfermé peut être raccordé à un système de recirculation (17-22) pour un liquide de chauffage ou de refroidissement, pour la mise en oeuvre du procédé de la revendication 1,
caractérisé en ce que
le système de recirculation (17-22), qui comprend un appareil de chauffage/refroidissement (17) et un dispositif de transmission thermique (20) pour le liquide de chauffage ou de refroidissement qui traverse l'espace annulaire (9), est inclus dans un circuit de régulation (14-17), de sorte que la température du liquide de chauffage ou de refroidissement est susceptible d'être régulée en fonction de signaux d'erreurs, tels que des écarts dans l'épaisseur sur la largeur de la structure plane en circulation, et en fonction d'au moins un paramètre de qualité, dans le sens qu'il se produit une influence et une optimisation de l'emprise par augmentation ou abaissement de la pression du fluide incompressible qui provoque le bombement.

12. Cylindre monté en rotation (1), en particulier cylindre de calandre (1) dans une installation pour la production ou la transformation de structures planes sans fin, qui forme une emprise avec un deuxième cylindre, et qui est constitué par deux tourillons de cylindre (4, 5) qui s'étendent en direction axiale, par deux disques terminaux (6, 7), et par un corps creux (10) soudé de manière étanche à la pression et formant l'enveloppe de cylindre (10), ledit corps creux présentant un bombement convexe produit par alimentation en pression au moyen d'un fluide incompressible, pour la mise en oeuvre du procédé selon la revendication 1,
caractérisé en ce que
le cylindre (1) est intégré dans un circuit de chauffage ou de refroidissement (26 à 36 ; 26 à 35, et 37) pour commander la température du fluide incompressible dans le sens d'une modification du bombement de l'enveloppe de cylindre par modification de la pression, et en ce que
le circuit de chauffage ou de refroidissement comprend un dispositif de chauffage/refroidissement (26), un dispositif de transmission thermique (29), ainsi qu'un circuit de régulation (14-16, 26, 30) pour réguler la température d'arrivée du fluide de chauffage ou de refroidissement en fonction de signaux d'erreur à partir des écarts mesurés dans l'épaisseur sur la largeur de la structure plane en circulation, et dans au moins un paramètre de qualité.

13. Cylindre selon l'une ou l'autre des revendications 11 et 12, caractérisé en ce que
le circuit de chauffage ou de refroidissement (26-35, 37) pour la commande de la température du fluide incompressible comprend des tubes (37), qui s'étendent dans la chambre à pression dans l'enveloppe de cylindre (10) qui contient le fluide incompressible (12), lesdits tubes étant agencés à distance radiale de l'axe (43) du cylindre, et se terminant au niveau, ou bien venant buter contre, les disques terminaux (6, 7).

14. Cylindre selon l'une ou l'autre des revendications 11 et 12, comprenant un noyau de cylindre (2) mis en place de manière étanche à la pression dans l'enveloppe de cylindre (10), ledit noyau de cylindre dépassant au-delà des disques terminaux (6, 7) par ses zones d'extrémités axiales qui forment les tourillons de montage (4, 5), caractérisé en ce que
le circuit de chauffage ou de refroidissement (26-35, 37) pour la commande de la température du fluide incompressible comprend des tubes (37) qui sont agencés à faible distance de la surface enveloppe (40) du noyau de cylindre (2) et répartis autour de ce dernier, lesdits tubes se terminant au niveau, ou bien venant buter contre, les disques terminaux (6, 7).

15. Cylindre selon l'une ou l'autre des revendications 11 et 12, comprenant un noyau de cylindre (2) mis en place de manière étanche à la pression dans l'enveloppe de cylindre (10), et dépassant au-delà des disques terminaux (6, 7) par ses zones d'extrémités axiales qui forment les tourillons de montage (4, 5), caractérisé en ce que
le circuit de chauffage ou de refroidissement (26 à 35, 37) pour la commande de la température du fluide incompressible comprend des perçages longitudinaux (36) répartis sur la périphérie du noyau (2) du cylindre, parallèlement à l'axe et à faible distance sous la surface enveloppe (40) du noyau (2) du cylindre.

16. Cylindre selon l'une ou l'autre des revendications 11 et 12, comprenant un noyau de cylindre (2) mis en place de manière étanche à la pression dans l'enveloppe de cylindre (10) et dépassant au-delà des disques terminaux (6, 7) par ses zones d'extrémités axiales qui forment les tourillons de montage (4, 5), caractérisé en ce que
la chambre à pression (12) qui contient le fluide incompressible et la chambre annulaire (9) susceptible d'être traversée par le liquide de chauffage/refroidissement sont subdivisées en direction axiale en plusieurs chambres à pression (12.1, 12.2, 12.3) et en plusieurs chambres annulaires (9.1, 9.2, 9.3), de sorte qu'une chambre à pression et une chambre annulaire respectives forment une paire de chambres (9.1, 12.1 ; 9.2, 12.2 ; 9.3, 12.3) qui est inclue, avec un dispositif de transmission thermique associé (17 ; 26 ; 56) et une conduite d'alimentation (22 ; 31 ; 59), dans un circuit de chauffage ou de refroidissement dont la température est susceptible d'être commandée indépendamment des autres paires.
